# EUROPEAN PATENT APPLICATION

(11) **EP 4 327 978 A2**
(43) Date of publication of application: **28.02.2024**
(21) Application number: 23190480.6
(22) Date of filing: 09.08.2023
(51) Int. Cl.: B23Q 11/08, B23Q 11/12

(54) **DENTAL DRILLING DEVICE HAVING PASSIVE AIR CURTAIN SPINDLE**

(30) Priority: 26.08.2022 KR 20220107514
(71) Applicant: Huvitz Co., Ltd., Anyang-si, Gyeonggi-do 14055 (KR); Ossvis Co., Ltd., Anyang-si, Gyeonggi-do 14055 (KR)
(72) Inventor: KYON, Byung Woo, 14055 Gyeonggi-do (KR); LEE, Weon Joon, 14055 Gyeonggi-do (KR)
(74) Representative: IPAZ

(57) **Abstract**

Disclosed is a dental drilling device for manufacturing a dental prosthesis by processing a material made of ceramic or the like and having a passive air curtain spindle for implementing a passive air curtain to seal the device. The dental drilling device includes: a spindle 20 including a spindle shaft 22 rotatably mounted inside a drilling device housing 10 and a spindle shaft fan 24 formed in a wing shape on an outer surface of the spindle shaft 22; a fixing socket 30 fixedly mounted to one end of the drilling device housing 10 and surrounding one end of the spindle 20 at a predetermined interval; a processing drill 40 mounted on a front end of the spindle 20 to process a workpiece; and a driving motor 50 coupled to the other end of the spindle 20 to rotate the spindle 2.

## Description

### CROSS-REFERENCE TO RELATED APPLICATION

This application claims priority from Korean Patent Application No. 10-2022-0107514, filed on August 26, 2022, which is incorporated herein by reference in its entirety.

### BACKGROUND

### 1. Technical Field

The present invention relates to a dental drilling device having a passive air curtain spindle, and more particularly, to a dental drilling device for manufacturing a dental prosthesis by processing a material made of ceramic or the like and having a passive air curtain spindle for implementing a passive air curtain to seal the device.

### 2. Description of the Related Art

A dental drilling device is an apparatus for manufacturing a dental prosthesis by processing a material made of ceramic or the like. Since the dental drilling device rotates at high speed and processes hard materials, water or cutting oil must always be supplied between a material to be processed and a tool mounted on a spindle. The supplied cutting oil touches the rotating spindle and tool, scatters in all directions, and enters the inside of the device through the side of the rotating spindle, which may damage bearings or motors inside the device. Therefore, in the dental drilling device, a portion in which the spindle is mounted must be equipped with a seal for preventing water or moisture from entering.

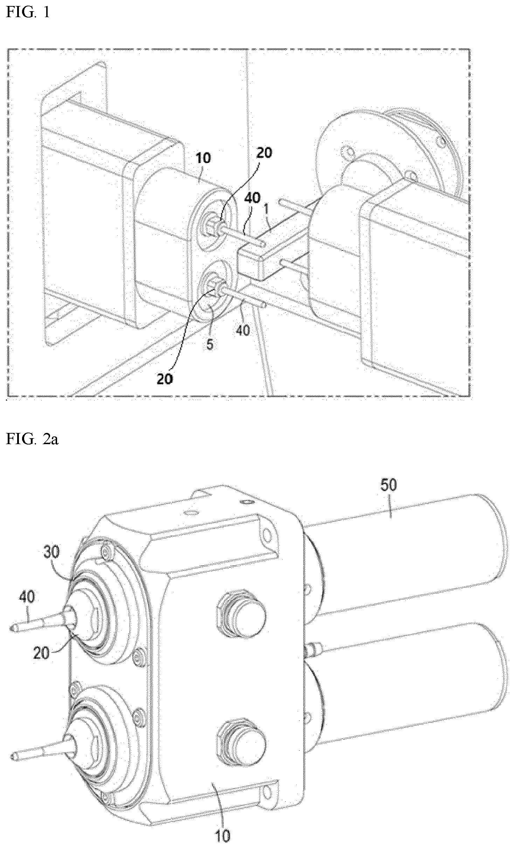

FIG. 1 illustrates a structure of a general dental drilling device. As shown in FIG. 1, a general dental drilling device includes one or more processing drills 40 for processing a workpiece 1; a spindle 20 to which the processing drill 40 is mounted and which rotates the processing drill 40; and a sealing 5 that prevents moisture and dust generated while the spindle 20 and the processing drill 40 rotate from entering a housing 10 of the device. Since the processing drill 40 and the spindle 20 rotate at high speed and generate heat, a seal for contact is generally easily worn or damaged. Therefore, a non-contact sealing structure is used to prevent moisture permeation without contacting the spindle 20. As the non-contact sealing structure, an air sealing method is used to prevent moisture from entering a gap between the spindle 20 and the housing 10 by spraying air inside the device.

In this conventional air sealing method, since air must be continuously supplied from the inside of the housing 10 to the outside during an operation of the device, although not shown in the drawings, a separate air supply device (for example, a compressor) must be essentially installed inside or outside the device, and a separate control device is also required to control this.

In general, in a dental drilling device, a spindle equipped with a processing drill rotates at a high speed, and at the same time water or cutting oil is supplied to the workpiece. Therefore, sealing is required to prevent moisture from penetrating into the side of the spindle, and in particular, an air sealing method using a separate air supply device (for example, a compressor) to cope with the high-speed rotation of the spindle has been used. Korean Patent No. 10-0983749 discloses an artificial tooth processing device including an air injection pipe to remove processing debris generated in the process of manufacturing a dental prosthesis by processing a ceramic material. However, the conventional processing device has a problem in that a separate electrically driven air supply device (for example, a compressor) must be used.

### SUMMARY

Accordingly, an object of the present invention is to provide a dental drilling device having a passive air curtain spindle that prevents dust, water, cutting oil, and the like generated during the processing of dental prosthesis from entering the device by generating air flow using a spindle shaft fan that rotates at high speed.

Another object of the present invention is to provide a dental drilling device having a passive air curtain spindle that may implement air sealing without using a separate electrically driven air supply device.

The present invention provides a dental drilling device including: a spindle including a spindle shaft rotatably mounted inside a drilling device housing and a spindle shaft fan formed in a wing shape on an outer surface of the spindle shaft; a fixing socket fixedly mounted to one end of the drilling device housing and surrounding one end of the spindle at a predetermined interval; a processing drill mounted on a front end of the spindle to process a workpiece; and a driving motor coupled to the other end of the spindle to rotate the spindle.

The dental drilling device having the passive air curtain spindle according to the present invention may implement air sealing without a separate air supply device by generating air flow using a spindle shaft fan rotating at a high speed.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 illustrates a structure of a general dental drilling device.
FIG. 2a illustrates an appearance of a dental drilling device according to an embodiment of the present invention, and FIG. 2b illustrates a cross-sectional view of an internal structure of a dental drilling device according to an embodiment of the present invention.
FIG. 3 illustrates a partially exploded perspective view of a dental drilling device according to an embodiment of the present invention.
FIG. 4 illustrates a perspective view of a spindle 20 used in a dental drilling device according to an embodiment of the present invention.
FIG. 5 illustrates an internal structure of a dental drilling device according to an embodiment of the present invention.
FIG. 6 illustrates air flow of a dental drilling device according to an embodiment of the present invention.

### DETAILED DESCRIPTION

Hereinafter, with reference to the accompanying drawings, the present disclosure will be described in detail.

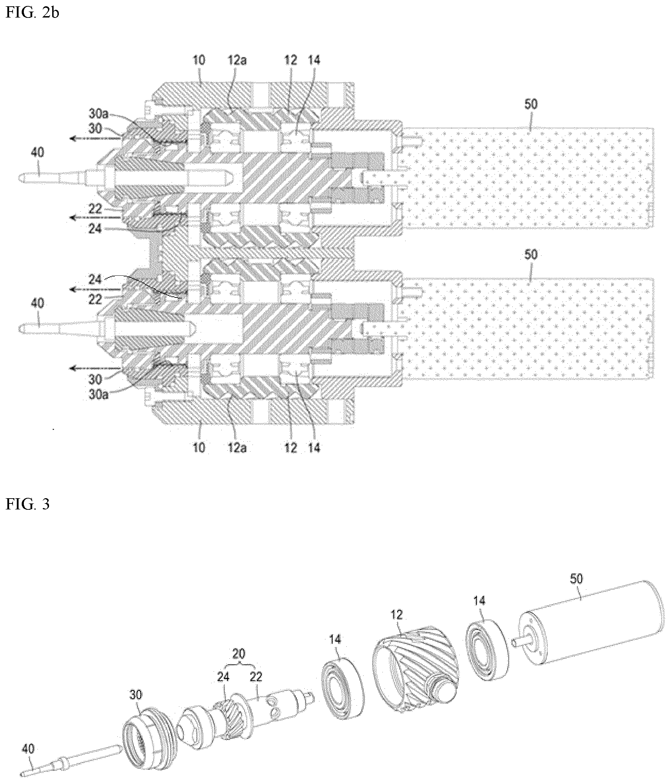

FIG. 2a illustrates an appearance of a dental drilling device according to an embodiment of the present invention, and FIG. 2b illustrates a cross-sectional view of an internal structure of a dental drilling device according to an embodiment of the present invention. FIG. 3 illustrates a partially exploded perspective view of a dental drilling device according to an embodiment of the present invention.

As shown in FIG. 2a, FIG. 2b, and FIG. 3, a dental drilling device according to the present invention includes a drilling device housing 10; a spindle 20 including a spindle shaft 22 rotatably mounted inside the drilling device housing 10 and a spindle shaft fan 24 formed in a wing shape on an outer surface of the spindle shaft 22; a fixing socket 30 fixedly mounted to one end of the drilling device housing 10 and surrounding one end of the spindle 20 at a predetermined gap; a processing drill 40 mounted on a front end of the spindle 20 to process a workpiece; and a driving motor 50 coupled to the other end of the spindle 20 to rotate the spindle 20.

The dental drilling device according to the present invention is an apparatus for manufacturing a dental prosthesis by processing a processing material made of ceramic and the like, and uses the rotating spindle 20, specifically the spindle shaft fan 24 to implement passive air sealing.

The drilling device housing 10 is a housing for accommodating and supporting components of the drilling device, for example, as shown in FIG. 2a and FIG. 2b, accommodating and supporting a pair of spindles 20 vertically positioned.

The drilling device housing 10 may include one or more bearings 14 for rotatably supporting the spindle 20, specifically the spindle shaft 22, and a bearing housing 12 in which the bearings 14 are mounted.

The bearing 14 fixes the spindle shaft 22, which is a rotational axis to be described later, at a predetermined position and rotatably supports the spindle shaft 22. The bearing 14 may be, for example, a typical ball bearing. The bearing 14 is mounted in the bearing housing 12.

An outer circumference of the bearing housing 12 allows movement of outside air. An air intakes for supplying air to the outer circumference of the bearing housing 12 is formed in the drilling device housing 10, and for example, four air intakes may be formed at a rear end of the drilling device housing 10. The spindle 20 connects the processing drill 40 and the driving motor 50, which will be described later, and is mounted on the drilling device housing 10.

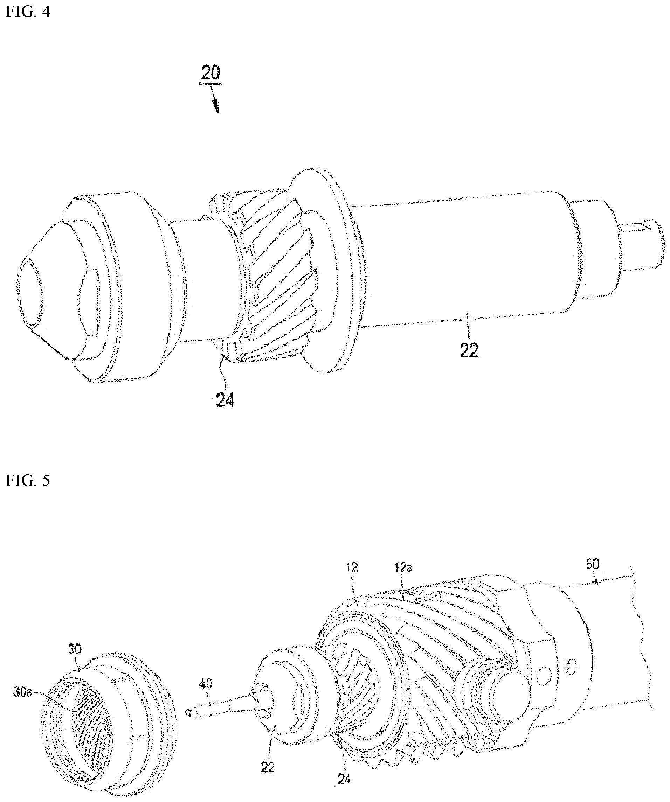

FIG. 4 is a perspective view of the spindle 20 used in the dental drilling device according to the embodiment of the present invention, and as shown in FIG. 4, the spindle 20 includes the spindle shaft 22 and the spindle shaft fan 24.

The spindle shaft 22 is a rotation shaft connecting the processing drill 40 and the drive motor 50 to be described later. Therefore, when the driving motor 50 operates to rotate the spindle shaft 22, the processing drill 40 mounted on the front end of the spindle shaft 22 also rotates.

The spindle shaft fan 24 is a wing-shaped fan formed at regular intervals on at least a portion of an outer surface of the spindle shaft 22. The spindle shaft fan 24 may have any shape without limitation as long as it may perform a function of a fan generating air flow, but may have a shape such as a wing, a cam line, a screw, a screw thread, or the like. The spindle shaft fan 24 rotates together with the spindle shaft 22.

FIG. 5 illustrates an internal structure of a dental drilling device according to an embodiment of the present invention. As shown in FIG. 5, the fixing socket 30 supports one end of the spindle 20 in the form of surrounding one end of the spindle 20 at a predetermined gap. The one end does not mean an end of the spindle 20, but means a portion of the spindle 20. The fixing socket 30 is fixedly mounted to the drilling device housing 10, and rotatably supports the spindle 20 in the form of surrounding one end of the spindle 20 and blocking the outside and inside of the spindle 20.

The fixing socket 30 is positioned at a predetermined gap from one end of the spindle 20, specifically, the spindle shaft 22 so that the spindle 20 may rotate. Generally, when processing a workpiece using a dental drilling device, water or cutting oil is supplied between the workpiece and the processing drill, and dust occurs during processing, so that impurities (foreign matters) may enter the inside of the drill device housing 10 in the gap between the fixing socket 30 and one end of the spindle shaft 22.

The drilling device according to the present invention, by generating air flow and discharging air from the inside of the drilling device housing 10 to the outside through the gap, serves as a seal itself without installing a separate electrically driven air supply device. Here, a labyrinth seal shape is formed in the gap between the spindle shaft 22 and the fixing socket 30 to further reduce the possibility of inflow of moisture from the outside. The labyrinth seal is a type of seal that reduces the amount of internal leakage by passing through several narrow gaps and receiving a pressure drop each time, and is generally capable of high-speed rotation without being affected by temperature and rotational resistance. Since the labyrinth seal generally increases the number of gaps according to pressure and reduces the flow rate to dissipate the pressure, due to this labyrinth structure, dust may be prevented from the outside and oil leakage/water leakage may be prevented from the inside.

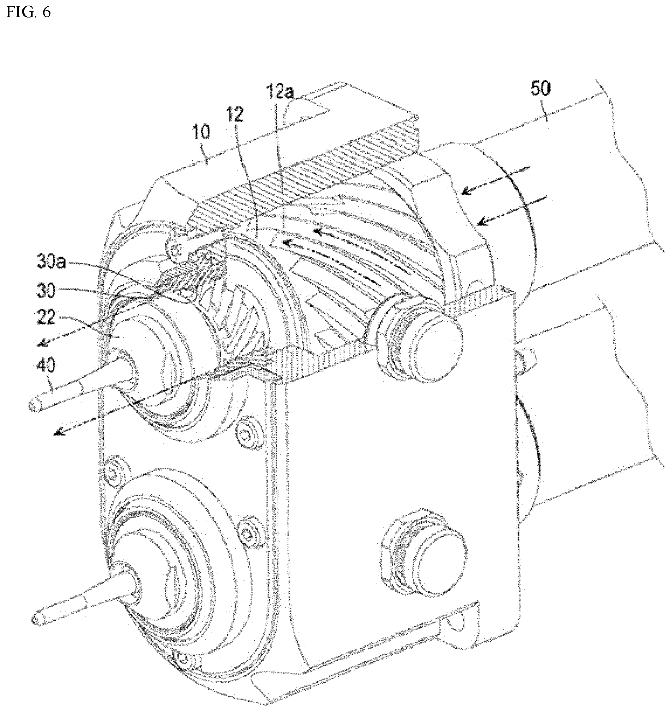

In the dental drilling device according to the present invention, the spindle shaft fan 24 is rotated to generate an air flow, preventing moisture inflow and acting as a seal. While the spindle shaft fan 24 rotates, it acts like a fan that draws in air and blows it out. Specifically, when the wing-shaped spindle shaft fan 24 rotates, air is introduced into the drilling device from the outside through the air inlet on the rear side (see FIG. 6). The air introduced into the inside of the drilling device is rotated together with the spindle shaft fan 24, and the spindle shaft fan 24 rotates the air to generate a flow of air discharged into a gap between the spindle 20 and the fixing socket 30.

That is, air is pushed into the gap between the spindle shaft 22 and the fixing socket 30 to increase internal pressure, and air is ejected through the gap to serve as a seal and an air pressure generating device itself. A direction of an arrow in FIG. 2b indicates the flow of air through the gap between the fixing socket 30 and one end of the spindle shaft 22 to release the air generated by the spindle shaft fan 24.

As shown in FIG. 5, an oblique groove 30a may be formed inside the fixing socket 30. Specifically, an oblique groove 30a formed in the opposite direction to the spindle shaft fan 24 may be formed in a portion of the inside of the fixing socket 30. Referring to FIG. 5, the oblique groove 30a may be formed at a position facing the spindle shaft fan 24. As can be seen in FIG. 6 described below, the spindle shaft 22 rotates, and air introduced from the outside is not ejected through the gap, and some air rotating with the spindle shaft fan 24 may be generated by centrifugal force between the spindle shaft fan 24. As such, due to some air rotating together with the spindle shaft fan 24 by the centrifugal force, the force of the air flow passing through the gap may be reduced. Therefore, in order to more efficiently discharge the air rotating together with the spindle shaft fan 24 to the outside through the fixing socket 30, an oblique groove 30a may be further formed in a portion of the inside of the fixing socket 30 to improve the force of the air flow. Since the fixing socket 30 is fixed without rotation, when the spindle shaft fan 24 rotates, the air that rotates together according to the centrifugal force hits the oblique groove 30a formed in the opposite direction to the spindle shaft fan 24 formed inside the fixing socket 30 and bounces off, and goes out into the gap between the fixing socket 30 and the spindle shaft 22.

The oblique groove 30a may be used without limitation as long as it has an oblique shape formed to be directed in the opposite direction to the spindle shaft fan 24, but it is preferable to have a screw thread shape.

Therefore, the dental drilling device according to the present invention generates air flow between the inside and outside of the spindle 20. More specifically, due to the rotation of the spindle shaft fan 24, the air pressure of the air passing through the gap (inside) between the fixing socket 30 and the spindle shaft 22 is increased, as a result, air is pushed out of the fixing socket 30 through the gap (inside) between the fixing socket 30 and the spindle shaft 22, so that impurities (foreign substances) do not penetrate into the drilling device, thus it acts as an air sealing by itself without using a separate air supply device.

The processing drill 40 is mounted on the front end of the spindle 20. The processing drill 40 is connected to the driving motor 50 by the spindle shaft 20. When the driving motor 50 operates, the processing drill 40 also rotates to process (cut) the workpiece. Generally, one or two processing drills 40 may be mounted on one drilling device, but are not limited thereto, and may vary. Specifically, one drilling device may have one or two spindles 20 connecting the driving motor 50 and the processing drill 40. The drilling devices may be present on both sides with the workpiece interposed therebetween (see FIG. 1). When these dental drilling devices operate, up to four processing drills 40 are rotated, so according to the shape of the tooth to be processed, one processing drill 40 on each of both sides rotates at a high speed as a main processing drill to process the workpiece. When two or more spindles 20 are installed, it is preferable that the other processing drill not used for processing the workpiece rotates together at a relatively low speed compared to the main processing drill in order to obtain a sealing effect.

The driving motor 50 may rotate at a rotational speed of 30,000 to 50,000 rpm so that a dental prosthesis may be manufactured by processing the workpiece.

In the present invention, a spiral thread 12a may be further formed on an outer circumference of the bearing housing 12 to form an air movement passage through which air moves. When air introduced from the outside flows along the thread 12a formed on the outer surface of the bearing housing 12, the temperature of the bearing 14 supporting the spindle 20 rotating at a high speed may be additionally reduced by the air cooling effect. That is, when air moves along the thread 12a formed on the outer surface of the bearing housing 12, the bearing 14 may be cooled by an air cooling effect. An air-cooling structure using the air flow suppresses the temperature rise of the bearing rotating at high speed, thereby improving the life of the bearing.

FIG. 6 illustrates air flow of a dental drilling device according to an embodiment of the present invention. As shown in FIG. 6, when the driving motor 50 rotates, external air is introduced into the inside of the drilling device through the air inlet. The air introduced through the air inlet is introduced through the thread 12a formed on the outer surface of the bearing housing 12 to be moved to the spindle shaft fan 24, and moves (flows) into the gap between the spindle shaft 22 and the fixing socket 30 via the spindle shaft fan 24.

As described above, in the dental drilling device according to the present invention, the spindle shaft fan 24 serves as a fan for causing air flow, so that it generates a flow of air to prevent dust, water, or cutting oil from entering the inside of the drilling device, thus a passive air sealing method may be implemented without using a separate air supply device (for example, a compressor, a regulator, a valve, a fitting, and the like).

The dental drilling device according to the present invention may more smoothly discharge the air coming in from the outside i) by ejecting the air sucked from the air inlet from the gap between the spindle shaft 22 and the fixing socket 30 and ii) by forming the oblique groove 30a directed in the opposite direction to the spindle shaft fan 24 inside the fixing socket 30 to reduce the air that rotates together with the spindle shaft fan 24 by centrifugal force. In addition, iii) by forming the thread 12a on the outer circumference of the bearing housing 12 to smoothly move the air to the spindle shaft fan 24, the temperature rise of the bearing rotating at a high speed may be suppressed.

In addition, in the dental drilling device according to the present invention, when the spindle 20 rotates, air sealing by forming an air curtain is automatically operated. Therefore, since there is no need to use a separate control device such as a solenoid valve, the device may be simplified and manufacturing costs may be reduced.

Although the present disclosure has been described with reference to the accompanying drawings and exemplary examples, the present disclosure is not limited to the contents shown in the drawings and the above-described examples. Although reference numerals are indicated to aid understanding in the claims, the scope of the following claims is not limited to the content shown in the reference numerals and drawings, and should be construed to cover all modifications, equivalent configurations and functions of the exemplary examples.

## Claims

1. A dental drilling device comprising:
a spindle (20) including a spindle shaft (22) rotatably mounted inside a drilling device housing (10) and a spindle shaft fan (24) formed in a wing shape on an outer surface of the spindle shaft (22);
a fixing socket (30) fixedly mounted to one end of the drilling device housing (10) and surrounding one end of the spindle (20) at a predetermined interval;
a processing drill (40) mounted on a front end of the spindle (20) to process a workpiece; and
a driving motor (50) coupled to the other end of the spindle (20) to rotate the spindle (20).

2. The drilling device according to claim 1, wherein the spindle shaft fan (24) rotates air to generate a flow of air discharged into a gap between the spindle (20) and the fixing socket (30).

3. The drilling device according to claim 1, wherein the drilling device housing (10) is equipped with one or more bearings (14) rotatably supporting the spindle shaft (22) and a bearing housing (12) to which the bearings (14) are mounted.

4. The drilling device according to claim 3, wherein the drilling device housing (10) is formed with an air inlet supplying air to an outer circumference of the bearing housing (12).

5. The drilling device according to claim 3, wherein a spiral thread (12a) is further formed on an outer circumference of the bearing housing (12) to form an air movement passage through which air moves.

6. The drilling device according to claim 5, wherein when air moves along the thread (12a) formed on an outer surface of the bearing housing (12), the bearing (14) is cooled by the air due to an air cooling effect.

7. The drilling device according to claim 1, wherein an oblique groove (30a) is formed inside the fixing socket (30).

8. The drilling device according to claim 7, wherein the oblique groove (30a) has a thread shape to be directed in an opposite direction to the spindle shaft fan (24).

9. The drilling device according to claim 1, wherein a separate electrically driven air supply device is not included.
